# EUROPÄISCHE PATENTANMELDUNG

(11) **EP 4 589 163 A1**
(43) Veröffentlichungstag der Anmeldung: **23.07.2025**
(21) Anmeldenummer: 25152161.3
(22) Anmeldetag: 16.01.2025
(51) Int. Cl.: F16C 35/077, B65G 39/09, F16C 13/02, F16C 27/06

(54) **ROLLENFLANSCH, AUSSENLÄUFERMOTOR UND FÖRDERROLLE**

(30) Priorität: 17.01.2024 DE 102024101288
(71) Anmelder: Logicdata Electronic & Software Entwicklungs GmbH, 8530 Deutschlandsberg (AT)
(72) Erfinder: Gödl, Philipp, 8054 Seiersberg-Pirka (AT)
(74) Vertreter: Epping - Hermann - Fischer

(57) **Zusammenfassung**

Ein Rollenflansch (100) zur Montage an einer Stirnseite einer zylindrischen oder walzenförmigen Rolle (200) umfasst einen im Wesentlichen ringförmigen Kunststoffkörper (110), ein Lager (120) und einen metallischen Ring (130), der das Lager (120) umgibt. Der Ring (130) und das Lager (120) sind zumindest teilweise in dem Kunststoffkörper (110) eingebettet. Der Ring (130) weist Elemente zur Kraftübertragung auf, die an oder auf einer Oberfläche des Kunststoffkörpers (110) verteilt positioniert sind. Die Elemente zur Kraftübertragung umfassen wenigstens ein Verriegelungsmittel (150a, 150b) für die Übertragung einer axialen Kraft zwischen der Rolle (200) und dem Rollenflansch (100), und wenigstens einen Zapfen (160a, 160b, 160c, 160d) für die Übertragung einer radialen Kraft zwischen der Rolle (200) und dem Rollenflansch (100).

## Beschreibung

Die Erfindung betrifft einen Rollenflansch, einen Außenläufermotor mit einem solchen Rollenflansch sowie eine Förderrolle mit einem solchen Rollenflansch.

Ein Rollenflansch ist an sich bekannt und wird zum Beispiel an einer Stirnseite von zylindrischen oder walzenförmigen Rollen montiert. Beispielsweise handelt es sich bei den Rollen um Rotorrollen von Außenläufermotoren oder Rollen von angetriebenen oder nicht angetriebenen Förderrollen.

Solche Förderrollen sind an sich bekannt und werden häufig in Förderanlagen verschiedenster Art eingesetzt, beispielsweise in einer Lagerhalle, einer Produktionsstätte oder auch in einem Verteilsystem. Solche Förderanlagen dienen zum Fördern und Sortieren von Lasten. Bei Förderanlagen mit Förderrollen der genannten Art (Rollenförderer) wird das Fördergut durch einzelne, mit dem Fördergut temporär in Kontakt stehende, Förderrollen transportiert. Neben elektrisch angetriebenen, motorisierten Förderrollen kann eine Förderanlage zusätzlich auch leerlaufende, nicht angetrieben Förderrollen aufweisen oder auch Förderrollen, die über einen Riemen von einer motorisierten Förderrolle angetrieben werden.

Rollen dieser Art bestehen im Allgemeinen aus einem rohrförmigen Mantel und zwei in den beiden Enden dieses rohrförmigen Rollenmantels befestigten Rollenböden, in denen die Rollenachse fest oder etwa mittels Wälzlagern drehbar gelagert ist. Es kommt dabei darauf an, einen festen Sitz der Rollenböden im Rollenmantel sowohl gegen axiale Verschiebung nach innen oder außen als auch gegen eine Drehbewegung zwischen dem Rollenmantel und dem Rollenboden zu erzielen.

Die Erzielung dieses dauerhaft festen Sitzes der Rollenböden im Rollenmantel ist jedoch schwierig. Wenn bei herkömmlichen Implementierungen der Rollenmantel und die Rollenböden aus unterschiedlichen Materialen bestehen, beispielsweise der Rollenmantel aus Metall und die Rollenböden aus Kunststoff, lockert sich die Verbindung zwischen beiden alsbald durch unterschiedliche Wärmedehnung der verschiedenen Werkstoffe.

Insbesondere bei schwer belasteten Rollen herkömmlicher Implementierungen wird außerdem durch die auftretende Walkarbeit zwischen dem Rollenmantel und den Rollenböden die Verbindung zwischen beiden gelockert, sodass eine Relativdrehung zwischen den Rollenböden und dem Rollenmantel auftritt, die, wenn sie einmal aufgetreten ist, im Dauerbetrieb immer stärker wird. Ein metallischer Rollenboden ist hingegen wiederum massereich und erhöht die Trägheit der Rolle.

Eine zu lösende Aufgabe besteht darin, ein verbessertes Verbindungskonzept für Förderrollen anzugeben, mit dem diese Nachteile und Probleme der bekannten Rollen beseitigt werden.

Diese Aufgabe wird mit den Merkmalen der unabhängigen Ansprüche gelöst. Vorteilhafte Ausgestaltungen mit zweckmäßigen und nicht trivialen Weiterbildungen der Erfindung sind in den jeweiligen Unteransprüchen angegeben.

Das verbessertes Verbindungskonzept ermöglicht beispielsweise eine Rolle zu schaffen, bei der die Rollenböden im Rollenmantel auf fertigungsmäßig einfache Weise sowohl gegen Axialverschiebung als auch gegen eine Relativdrehung absolut und dauerhaft fest verankert sind, selbst wenn hohe Belastungen und Temperaturschwankungen auftreten, wobei auch die Maßtoleranzen in wirtschaftlich vertretbarer Größe bleiben können.

In einer Ausführungsform gemäß dem verbesserten Verbindungskonzept ist der Rollenflansch zur Montage an einer Stirnseite einer zylindrischen oder walzenförmigen Rolle eingerichtet, wobei der Rollenflansch einen im Wesentlichen ringförmigen Kunststoffkörper, ein Lager, und einen metallischen Ring umfasst, der das Lager umgibt. Der Ring und das Lager sind zumindest teilweise im Kunststoffkörper eingebettet. Der Ring weist Elemente zur Kraftübertragung auf, die an oder auf einer Oberfläche, beispielsweise auf der Umfangsfläche, des Kunststoffkörpers verteilt positioniert sind. Die Elemente zur Kraftübertragung umfassen ein oder mehrere Verriegelungsmittel für die Übertragung einer axialen Kraft zwischen der Rolle und dem Rollenflansch, beispielsweise zur axialen Verriegelung der ersten Rolle mit dem Rollenflansch, sowie ein oder mehrere Zapfen für die Übertragung einer radialen Kraft zwischen der ersten Rolle und dem Rollenflansch bzw. umgekehrt, etwa eines Drehmoments.

Durch die Verwendung metallischer Elemente zur Kraftübertragung verbessert sich die Haltbarkeit bzw. Widerstandsfähigkeit des Rollenflansches sowohl gegen Axialverschiebung als auch gegen eine Relativdrehung. Durch die Einbettung eines vergleichsweise leichten Metallrings in den Kunststoffkörper des Rollenflansch wird die Masse und Trägheit des Rollenflansch nur geringfügig erhöht.

In verschiedenen Ausführungen ist der wenigstens eine Zapfen des Rollenflansches eingerichtet, mit wenigstens einer entsprechenden Aussparung der Rolle eine formschlüssige Verbindung zu bilden. Dadurch kann eine stabile Übertragung der Kraft bzw. des Drehmoments erreicht werden.

Beispielsweise sind der Ring, das Lager und der Kunststoffkörper koaxial zur Rotationsachse der ersten Rolle angeordnet.

In verschiedenen Ausführungen ist der Ring auf das Lager aufgesteckt. Dies ermöglicht eine einfache Montage. Dies kann ferner unterstützt werden, indem der Ring wenigstens ein elastisches Aufsteckmittel, beispielsweise Beinchen, aufweist, das in Kontakt mit dem Lager ist. Das elastische Aufsteckmittel dient beispielsweise dazu, um die Montage des Rings auf dem Lager zu erleichtern.

In verschiedenen Ausführungen umfasst der Rollenflansch mindestens ein zapfenartiges Fixierelement zur Fixierung einer weiteren Rolle und eine Schulter zur Vermeidung einer axialen Verschiebung der weiteren Rolle.

In einigen Ausführungen umfasst der Rollenflansch einen Drehmomentübertrager, etwa eine Riemenscheibe oder ein Zahnrad, der zur Übertragung eines Drehmoments eingerichtet ist.

Gemäß dem verbesserten Verbindungskonzept kann ein Rollenflansch gemäß einer der beschriebenen Ausführungen in einem Außenläufermotor und/oder in einer Förderrolle eingesetzt werden.

In einer Ausführungsform eines Außenläufermotors mit einem Rollenflansch gemäß dem verbesserten Verbindungskonzept umfasst der Außenläufermotor die Rolle, die zum Beispiel als Rotor oder Außenläufer des Außenläufermotors ausgebildet ist. Dabei ist der Rollenflansch an einer Stirnseite der Rolle des Außenläufermotors montiert. Die Rolle wird dabei elektrisch angetrieben, insbesondere vom Außenläufermotor. Der wenigstens eine Zapfen des Rollenflansches überträgt ein Drehmoment von der Rolle auf den Rollenflansch.

In einer Ausführungsform einer nicht-elektrischen Förderrolle mit einem Rollenflansch gemäß dem verbesserten Verbindungskonzept in einer Ausführung mit Drehmomentübertrager umfasst die Förderrolle eine Rolle. Dabei ist der Rollenflansch an einer Stirnseite der Rolle montiert. Der Rollenflansch ist eingerichtet, mittels des Drehmomentübertragers, etwas mittels eines an dem Drehmomentübertrager angebrachten Riemens oder Zahnrads, von einem externen Antrieb, etwa einem Außenläufermotor, angetrieben zu werden. Der wenigstens eine Zapfen des Rollenflansches überträgt ein Drehmoment von dem Rollenflansch auf die Rolle.

In einer Ausführungsform einer elektrischen Förderrolle mit einem Rollenflansch gemäß dem verbesserten Verbindungskonzept umfasst die Förderrolle einen Außenläufermotor, eine erste Rolle, die etwa als Rotor oder Außenläufer des Außenläufermotors ausgebildet ist, und eine zweite Rolle, die zur ersten Rolle konzentrisch angeordnet ist. Dabei ist der Rollenflansch an einer Stirnseite der ersten Rolle des Außenläufermotors montiert. Ferner wird die erste Rolle von dem Außenläufermotor angetrieben. Der wenigstens eine Zapfen des Rollenflansches überträgt ein Drehmoment von der ersten Rolle auf den Rollenflansch. Der Rollenflansch überträgt das Drehmoment der ersten Rolle auf die zweite Rolle.

In einer Weiterbildung einer solchen elektrischen Förderrolle umfasst der Rollenflansch mindestens ein zapfenartiges Fixierelement zur Fixierung der zweiten Rolle und eine Schulter zur Vermeidung einer axialen Verschiebung der zweiten Rolle.

In einer alternativen oder zusätzlichen Weiterbildung einer solchen elektrischen Förderrolle umfasst der Rollenflansch einen Drehmomentübertrager wie oben erläutert, etwa eine Riemenscheibe oder ein Zahnrad, der zur Übertragung eines Drehmoments eingerichtet ist. Die Förderrolle ist eingerichtet, mittels des Drehmomentübertragers am Rollenflansch Drehmoment, etwa mittels eines an dem Drehmomentübertrager angebrachten Riemens oder eines Zahnrads, an wenigstens eine oder mehrere nicht elektrische Förderrollen eines Rollenförderers zu übertragen.

Damit lässt sich beispielsweise ein Rollenförderer mit mehreren elektrischen und nicht-elektrischen Förderrollen realisieren.

Das verbesserte Verbindungskonzept wird nachfolgend anhand von Ausführungsbeispielen unter Bezugnahme auf die Zeichnungen näher erläutert. Hierbei sind gleichartige Elemente oder Elemente gleicher Funktionen mit denselben Bezugszeichen bezeichnet. Daher wird auf eine wiederholte Erläuterung einzelner Elemente gegebenenfalls verzichtet. Die Ausführungsbeispiel dienen dabei der Erläuterung und nicht etwa der Abgrenzung des verbesserten Verbindungskonzepts.

Es zeigen, teils vereinfacht:
- Fig. 1: eine Schnittansicht eines Ausführungsbeispiels eines Rollenflansches montiert an einer Stirnseite einer Rolle;
- Fig. 2a: ein Ausführungsbeispiel eines Rollenflansches;
- Fig. 2b: ein Ausführungsbeispiel eines nicht umspritzten Rollenflansches;
- Fig. 2c: ein Ausführungsbeispiel eines metallischen Rings des Rollenflansches;
- Fig. 3: eine Explosionszeichnung einer Rolle mit Rollenflansch;
- Fig. 4: eine Explosionszeichnung eines Ausführungsbeispiels mit einem Rollenflansch und einem Drehmomentübertrager;
- Fig. 5a: ein Detail eines Ausführungsbeispiels eines metallischen Rings für einen Rollenflansch mit einem Drehmomentübertrager;
- Fig. 5b: einen Querschnitt durch ein Ausführungsbeispiel eines Rollenflansches mit Drehmomentübertrager;
- Fig. 6: ein Ausführungsbeispiel eines Außenläufermotors mit einem Rollenflansch;
- Fig. 7: ein Ausführungsbeispiel eines Rollenförderers mit Außenläufermotor und nicht elektrischen Förderrollen;
- Fig. 8: ein Ausführungsbeispiel einer elektrischen Förderrolle mit Außenläufermotor;
- Fig. 9: ein Ausführungsbeispiel eines Rollenförderers mit elektrischen und nicht elektrischen Förderrollen; und
- Fig. 10: ein Ausführungsbeispiel einer nicht elektrischen Förderrolle.

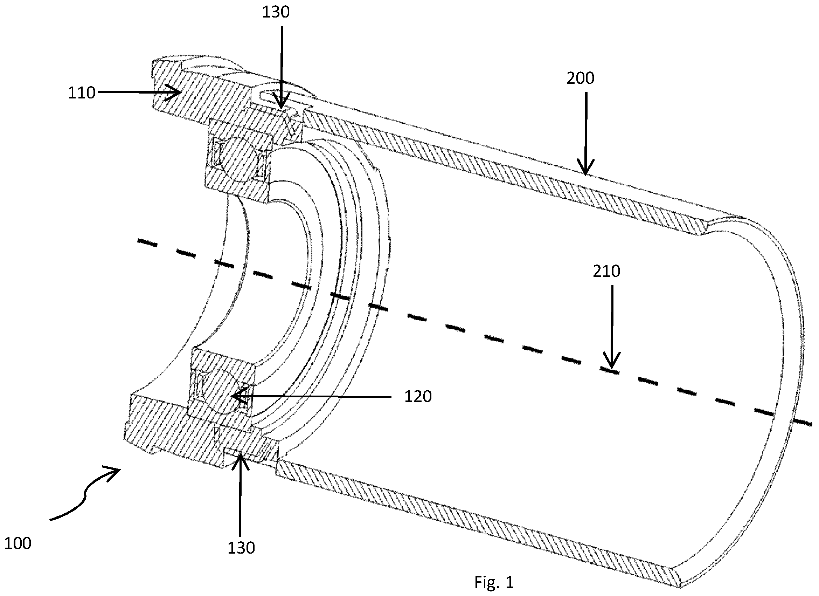

In Fig. 1 wird eine Ausprägung eines Rollenflansches 100 zur Montage an einer Stirnseite einer zylindrischen oder walzenförmigen Rolle 200 gezeigt, der einen im Wesentlichen ringförmigen Kunststoffkörper 110, ein Lager 120, und einen metallischen Ring 130 umfasst, der das Lager 120 umgibt. Vom metallischen Ring 130 ist hier nur ein Teil sichtbar.

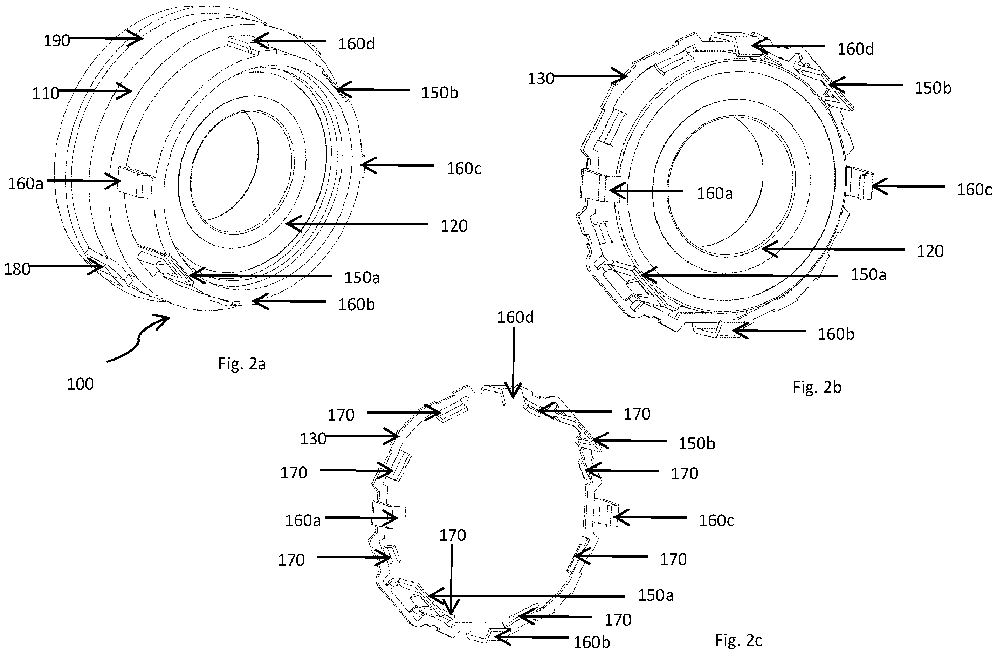

Die Fig. 2a bis 2c zeigen einen Rollenflansch 100 gemäß dem verbesserten Verbindungskonzept in verschiedenen Ansichten. Fig. 2a zeigt den Rollenflansch 100, der einen Kunststoffkörper 110 und ein Lager 120 umfasst, wobei ein metallischer Ring 130 (nur in Fig. 2b und Fig. 2c sichtbar) durch den Kunststoffkörper 110 umspritzt ist.

Der Rollenflansch 100 weist Elemente zur Kraftübertragung auf, die an oder auf einer Oberfläche, insbesondere der Umfangsfläche, des Kunststoffkörpers 110 verteilt positioniert sind und Teile des metallischen Rings 130 sind. In Fig. 2b und Fig. 2c sind Ausprägungen für solche Elemente zur Kraftübertragung gezeigt. Einerseits umfasst der metallische Ring 130 ein oder mehrere Verriegelungsmittel 150a, 150b für die Übertragung einer axialen Kraft zwischen der Rolle 200 und dem Rollenflansch 110. Andererseits weist der Ring 130 ein oder mehrere Zapfen 160a, 160b, 160c, 160d für die Übertragung einer radialen Kraft zwischen der Rolle 200 und dem Rollenflansch 110 auf.

Die Elemente zur Kraftübertragung ragen nach dem Umspritzen des metallischen Rings 130 aus der äußeren Oberfläche des Kunststoffkörpers 110 vor.

Der metallische Ring 130 ist beispielsweise durch ein oder mehrere elastische Aufsteckmittel 170 am Lager 120 aufgeschoben. Damit kann der Ring 130 vor dem Umspritzen mit Kunststoff am Lager 120 befestigt werden. Beispielsweise können die Aufsteckmittel als Beinchen geformt werden, die den Ring am Außenring des Lagers zentriert halten.

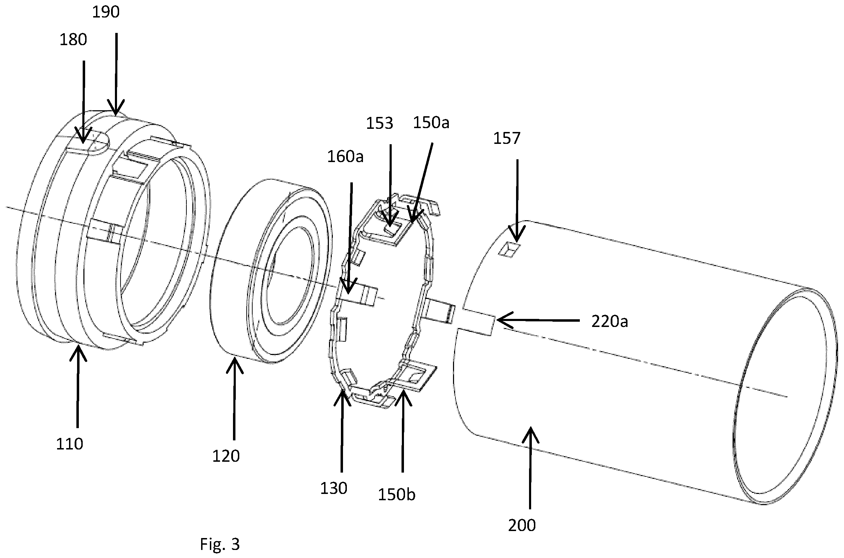

In der Fig. 3 ist ein in der Rolle 200 stirnseitig montierter Rollenflansch 100 in Explosionsdarstellung gezeigt. Der metallische Ring 130 umfasst die Verriegelungsmittel 150a, 150b für die Übertragung einer axialen Kraft zwischen der Rolle 200 und dem Rollenflansch 110. Nach dem Umspritzen befindet sich der metallische Ring 130 im Wesentlichen in der Kunststoffumspritzung. Nur die Elemente zur Kraftübertragung ragen darüber hinaus.

In der Ausprägung in Fig.3 sind die Verriegelungsmittel 150a, 150b bügelartig geformt und weisen ein Rastmittel 153 zum Einrasten in eine Öffnung oder Nut 157 der Rolle auf, insbesondere einen Haken.

In der Ausprägung in Fig.3 bilden die ein oder mehreren Zapfen 160a, 160b, 160c, 160d des Rollenflansches mit entsprechenden Aussparungen 220a der Rolle 200 eine formschlüssige Verbindung. Mithilfe der Verbindung wird eine radiale Kraft zwischen Rollenflansch 100 und Rolle 200 übertragen.

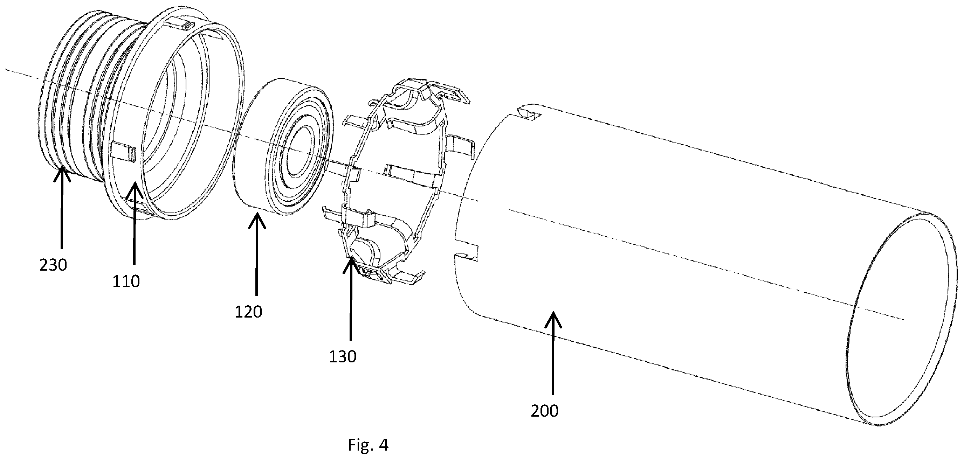

Die Fig. 4 zeigen einen Rollenflansch 100 gemäß dem verbesserten Verbindungskonzept in einer weiteren Ausprägung mit einem Drehmomentübertrager 230. Der Drehmomentübertrager 230 ist beispielsweise als Riemenscheibe realisiert, könnte aber auch durch ein Zahnrad oder ähnliches realisiert werden. Der Drehmomentübertrager 230 ist Teil des Kunststoffkörpers 110 des Rollenflansches 100. Der gleiche Umspritzungsvorgang, der den Ring 130 und das Lager 120 im Kunststoffkörper einbettet, kann auch den Drehmomentübertrager 230 ausformen. Es ist dann nur ein einziger Umspritzungsvorgang nötig. Der Drehmomentübertrager 230 besteht aus dem gleichen Kunststoff wie der Kunststoffkörper.

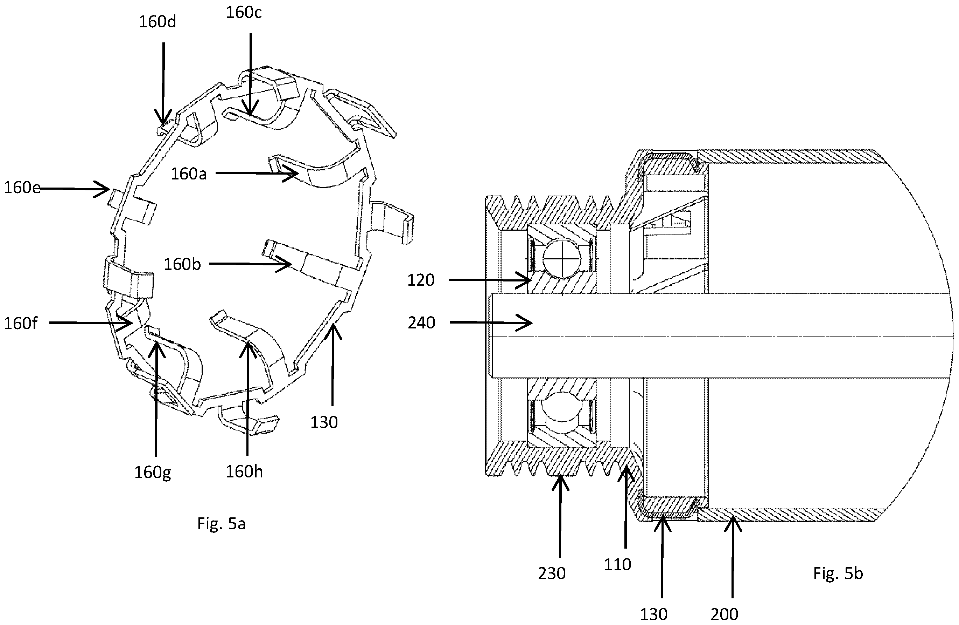

Die Fig. 5a zeigt eine Ausprägung eines Rings 130 für einen Rollenflansch 100 mit Drehmomentübertrager 230. Die elastischen Aufsteckmittel 160a-160h sind im Gegensatz zu der Ausprägung in Fig. 2c verlängert, um den Abstand zwischen dem Lager 120 und der Rolle 200 zu vergrößern. Dadurch befindet sich das Lager 120 im Bereich unter dem Drehmomentübertrager 230 und kann die in diesem Bereich auftretenden Kräfte besser ableiten.

In der Fig. 5b ist ein Querschnitt der Ausprägung gezeigt. Der Kunststoffkörper 110 umfasst einen Abschnitt, der beispielsweise als riemenscheibenartiger Drehmomentübertrager 230 geformt ist. Beispielsweise kann der Drehmomentübertrager Kraft auf einen oder mehrere V-Riemen übertragen.

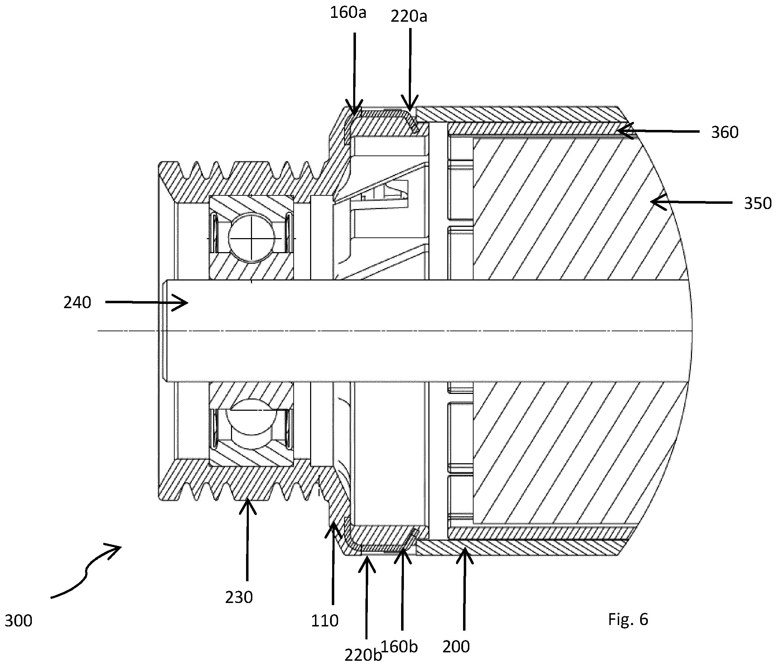

Die Fig. 6 zeigt eine Anwendung eines Rollenflansches 100 gemäß dem verbesserten Verbindungskonzept in einem Außenläufermotor 300. Ein Außenläufermotor 300 umfasst in üblicher Ausführung eine starre Achse 240 mit Stator 350 und einem Rotor 360, der sich um den Stator dreht. Der Rotor 360 ist dabei eine zylindrische Rolle, bzw. drehfest mit einer solchen verbunden. Der Rotor 360 stellt somit eine erste Rolle 200 im Sinne des verbesserten Verbindungskonzepts dar. Somit lässt sich der Rollenflansch 100 stirnseitig mit dem als erste Rolle ausgebildeten Rotor 200 des Außenläufermotors verbinden. Das Drehmoment des elektrisch angetriebenen Rotors 200 wird über die ein oder mehreren Zapfen 160a, 160b des Rings des Rollenflansch vom Rotor bzw. der Rolle 200 auf den Kunststoffkörper 110 des Rollenflansch 100 übertragen.

Zusätzlich sichern die Verriegelungsmittel 150a, 150b (in Fig. 6 nicht sichtbar) die Verbindung zwischen Rollenflansch 100 und Rotor 200 gegen axiale Kräfte und ein Lösen des Rollenflansch 100 vom Rotor 200.

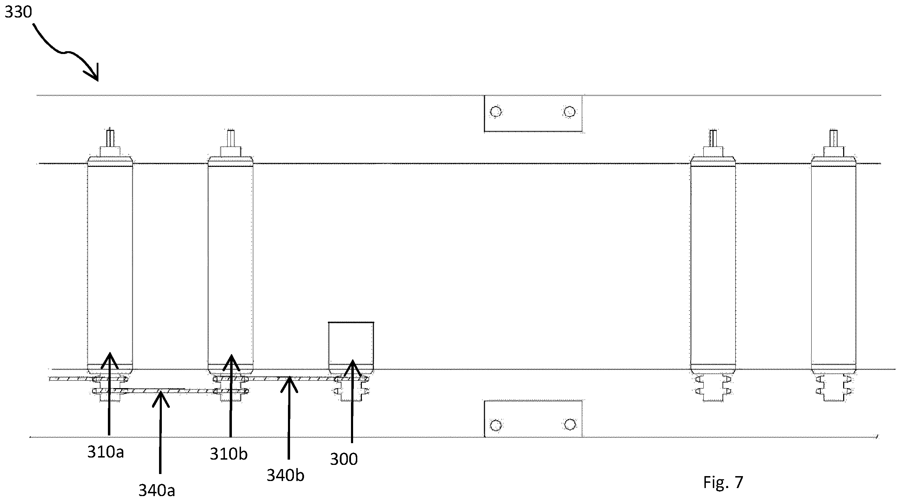

Durch die Verwendung des Rollenflansch 100 mit einem Drehmomentübertrager 230 an einem Außenläufermotor 300 kann der Außenläufermotor 300 über einen oder mehrere Riemen 340a, 340b andere nicht elektrische Förderrollen 310a, 310b in einem Rollenfördersystem 330 antreiben (siehe Fig. 7).

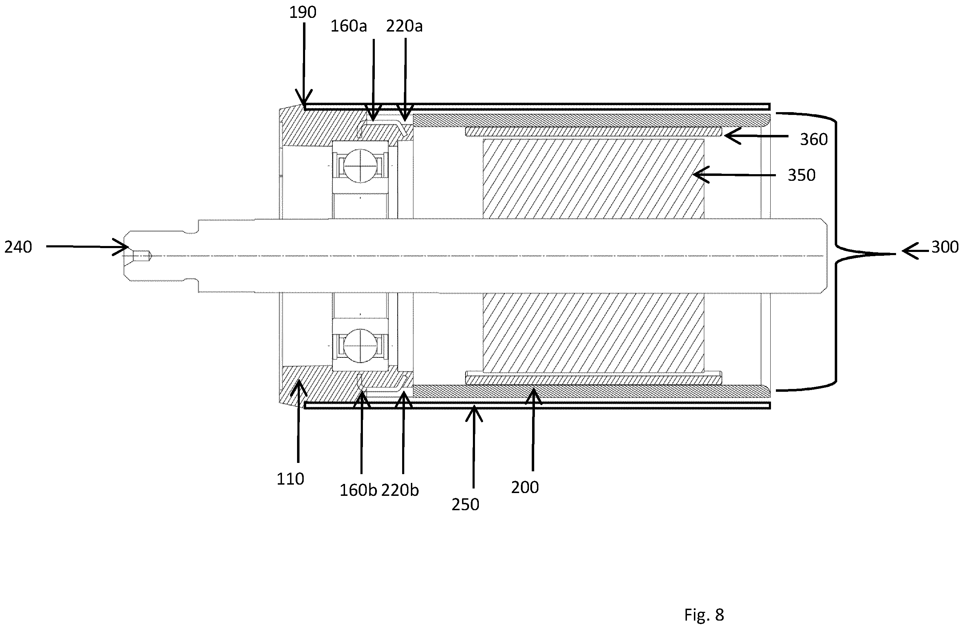

In einer anderen Ausprägung gemäß dem verbesserten Verbindungskonzept ist der Außenläufermotor 300 Teil einer elektrischen Förderrolle 320. Fig. 8 zeigt eine solche Ausprägung. Die elektrische Förderrolle 320 mit einem Rollenflansch 100 umfasst einen Außenläufermotor 300, eine erste Rolle 200, insbesondere als einen Rotor 360 bzw. Außenläufer des Außenläufermotors 300, wobei der Rollenflansch an einer Stirnseite der ersten Rolle 200 des Außenläufermotors montiert ist, wobei die erste Rolle 200 vom Außenläufermotor angetrieben wird. Das Drehmoment der ersten Rolle 200 wird über die ein oder mehreren Zapfen 160a, 160b, 160c, 160d des Rollenflansch von der ersten Rolle 200 auf den Rollenflansch 100 übertragen.

Die elektrische Förderrolle 320 umfasst darüber hinaus eine weitere, zweite Rolle 250, die in Kontakt mit einem zu fördernden Gut steht. Diese zweite Rolle 250 ist ebenfalls mit dem Rollenflansch 100 verbunden. Dazu weist der Rollenflansch eine Schulter 190 mit Anschlag auf. Die zweite Rolle 250 ist auf diese Schulter 190 aufgeschoben und in Kontakt mit dem Anschlag, um eine axiale Verschiebung der zweiten Rolle zu vermeiden. Die zweite Rolle ist konzentrisch zur ersten Rolle 200 und drehfest mit dem Rollenflansch verbunden, damit das Drehmoment des Rollenflansch 100 auf die zweite Rolle 250 übertragen werden kann. Die zweite Rolle 250 umgibt in dieser Ausführung die erste Rolle 200, zumindest teilweise.

In einer weiteren Ausprägung weist der Rollenflansch 100 mindestens ein zapfenartiges Fixierelement 180 (siehe Fig. 3) zur Fixierung der zweiten Rolle 250 auf, das die zweite Rolle 250 zusätzlich gegen eine radiale Verdrehung gegenüber dem Rollenflansch sichert. In der Fig. 3 ist die zweite Rolle 250 nicht gezeigt, da sie sonst die Details der darunterliegenden Elemente verdecken würde.

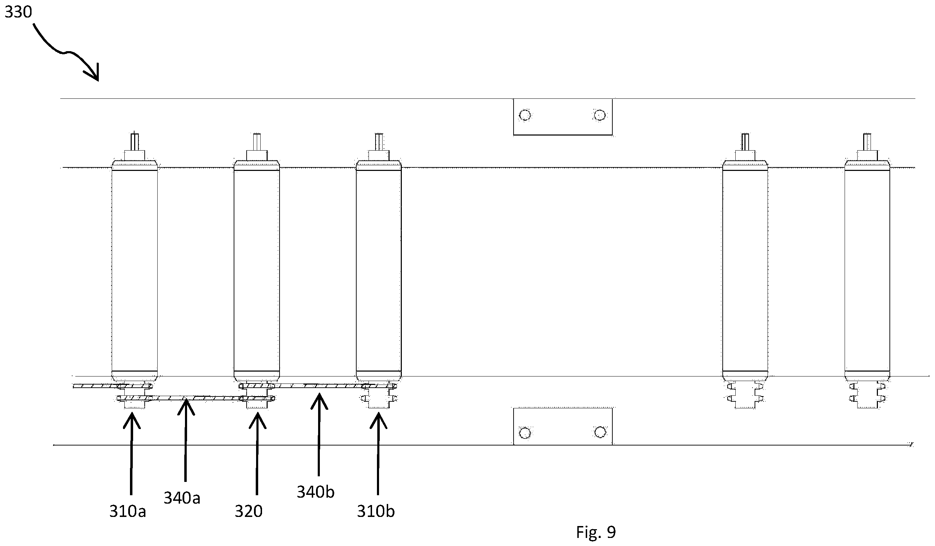

In einer weiteren Ausprägung ist eine elektrische Förderrolle 320 mit einem Rollenflansch mit einem Drehmomentübertrager 230 ausgestattet. Mit Hilfe eines oder mehrerer Riemen 340a, 340b können andere nicht elektrische Förderrollen 310a, 310b in einem Rollenfördersystem 330 von der elektrischen Förderrolle 320 angetrieben werden (siehe Fig. 9).

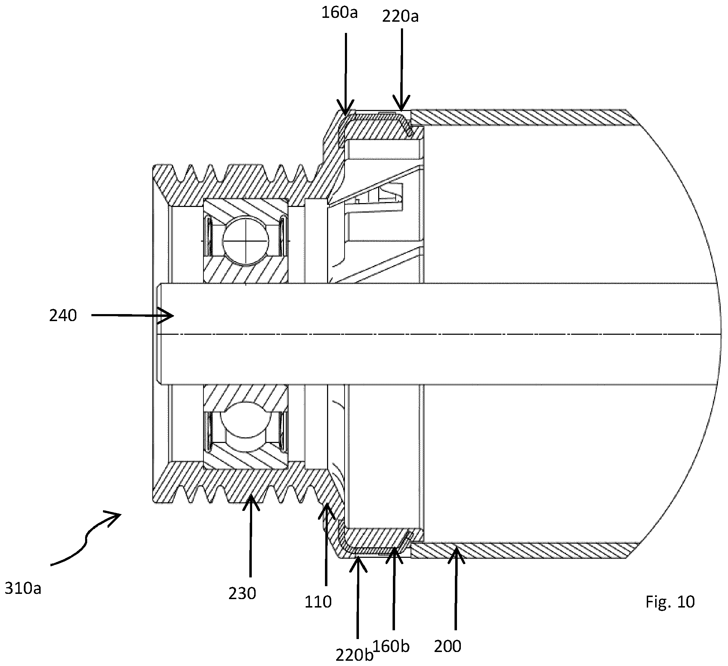

In einer weiteren Ausprägung lässt sich der Rollenflansch 100 auch in einer nicht elektrischen Förderrolle 310a einsetzen, wie in Fig. 10 gezeigt. Der Aufbau der nicht elektrischen Förderrolle ist bis auf den fehlenden Außenläufermotor identisch zu Fig. 6. Der Antrieb der nicht elektrischen Förderrolle 310a erfolgt beispielsweise durch einen Außenläufermotor 300 oder eine elektrische Förderrolle 320 mit Hilfe von Riemen 340a, 340b über den Drehmomentübertrager 230. Das Drehmoment wird über den Rollenflansch und die ein oder mehreren Zapfen 160a, 160b, des Rollenflansch vom Rollenflansch 100 auf die erste Rolle 200 übertragen.

In einer weiteren Ausprägung weist der Rollenflansch 100 ein oder mehrere Verriegelungsmittel 150a, 150b für die Übertragung einer axialen Kraft zwischen erster Rolle 200 und Rollenflansch 100 zur axialen Verriegelung der ersten Rolle mit dem Rollenflansch 100 auf.

### Bezugszeichenliste

- 100: Rollenflansch
- 110: Kunststoffkörper
- 120: Lager
- 130: Ring
- 150a, 150b: Verriegelungsmittel
- 153: Rastmittel
- 157: Öffnung oder Nut
- 160a, 160b, 160c, 160d, 160e, 160f, 160g, 160h: Zapfen
- 170: Aufsteckmittel
- 180: Fixierelement
- 190: Schulter
- 200: erste Rolle
- 210: Rotationsachse
- 220a, 220b: Aussparung der ersten Rolle
- 230: Drehmomentübertrager
- 240: starre, nicht drehbare Achse
- 250: zweite Rolle
- 300: Außenläufermotor mit Rollenflansch
- 310a, 310b: nicht elektrisch angetriebene Förderrollen
- 320: elektrisch angetriebene Förderrolle
- 330: Rollenförderer
- 340a, 340b: Antriebsriemen, insbesondere V-Riemen
- 350: Stator des Außenläufermotors
- 360: Rotor des Außenläufermotors

## Patentansprüche

1. Rollenflansch (100) zur Montage an einer Stirnseite einer zylindrischen oder walzenförmigen Rolle (200), der Rollenflansch (100) umfassend
- einen im Wesentlichen ringförmigen Kunststoffkörper (110);
- ein Lager (120); und
- einen metallischen Ring (130), der das Lager (120) umgibt; wobei
- der Ring (130) und das Lager (120) zumindest teilweise in dem Kunststoffkörper (110) eingebettet sind;
- der Ring (130) Elemente zur Kraftübertragung aufweist, die an oder auf einer Oberfläche, insbesondere der Umfangsfläche, des Kunststoffkörpers (110) verteilt positioniert sind; und
- die Elemente zur Kraftübertragung umfassen:
- wenigstens ein Verriegelungsmittel (150a, 150b) für die Übertragung einer axialen Kraft zwischen der Rolle (200) und dem Rollenflansch (100), insbesondere zur axialen Verriegelung der Rolle (200) mit dem Rollenflansch (100); und
- wenigstens einen Zapfen (160a, 160b, 160c, 160d) für die Übertragung einer radialen Kraft, insbesondere eines Drehmoments, zwischen der Rolle (200) und dem Rollenflansch (100).

2. Rollenflansch (100) nach Anspruch 1, wobei der wenigstens eine Zapfen (160a, 160b, 160c, 160d) des Rollenflansches eingerichtet ist, mit wenigstens einer entsprechenden Aussparung (220a, 220b) der Rolle (200) eine formschlüssige Verbindung zu bilden.

3. Rollenflansch (100) nach Anspruch 1 oder 2, wobei der Ring (130), das Lager (120) und der Kunststoffkörper (110) koaxial zur Rotationsachse der ersten Rolle (200) angeordnet sind.

4. Rollenflansch (100) nach einem der Ansprüche 1 bis 3, wobei der Ring (130) auf das Lager (120) aufgesteckt ist.

5. Rollenflansch (100) nach Anspruch 4, wobei der Ring (130) wenigstens ein elastisches Aufsteckmittel (170), insbesondere Beinchen, aufweist, das in Kontakt mit dem Lager (120) ist.

6. Rollenflansch (100) nach einem der Ansprüche 1 bis 5, wobei der Rollenflansch (100) mindestens ein zapfenartiges Fixierelement (180) zur Fixierung einer weiteren Rolle (250) und eine Schulter (190) zur Vermeidung einer axialen Verschiebung der weiteren Rolle (250) umfasst.

7. Rollenflansch (100) nach einem der Ansprüche 1 bis 6, wobei der Rollenflansch (100) einen Drehmomentübertrager (230) umfasst, insbesondere eine Riemenscheibe oder ein Zahnrad, der zur Übertragung eines Drehmoments eingerichtet ist.

8. Außenläufermotor (300) mit einem Rollenflansch (100) nach einem der Ansprüche 1 bis 7, umfassend die Rolle (200), die insbesondere als Rotor (360) oder Außenläufer des Außenläufermotors (300) ausgebildet ist, wobei
- der Rollenflansch (100) an einer Stirnseite der Rolle (200) des Außenläufermotors (300) montiert ist;
- die Rolle (200) elektrisch angetrieben wird; und
- der wenigstens eine Zapfen (160a, 160b, 160c, 160d) des Rollenflansches ein Drehmoment von der Rolle (200) auf den Rollenflansch (100) überträgt.

9. Nicht-elektrische Förderrolle (310a, 310b) mit einem Rollenflansch (100) nach Anspruch 7, die Förderrolle umfassend eine Rolle (200), wobei
- der Rollenflansch (100) an der Stirnseite der Rolle (200) montiert ist;
- der Rollenflansch (100) eingerichtet ist, mittels des Drehmomentübertragers (230), insbesondere mittels eines an dem Drehmomentübertrager (230) angebrachten Riemens (340a, 340b) oder Zahnrads, von einem externen Antrieb, insbesondere einem Außenläufermotor (300), angetrieben zu werden; und
- der wenigstens eine Zapfen (160a, 160b, 160c, 160d) des Rollenflansches ein Drehmoment von dem Rollenflansch (100) auf die Rolle (200) überträgt.

10. Elektrische Förderrolle (320) mit einem Rollenflansch (100) nach einem der Ansprüche 1 bis 7, die Förderrolle umfassend
- einen Außenläufermotor (300);
- eine erste Rolle (200), die insbesondere als Rotor (360) oder Außenläufer des Außenläufermotors (300) ausgebildet ist; und
- eine zweite Rolle (250), die zur ersten Rolle (200) konzentrisch angeordnet ist; wobei
- der Rollenflansch (100) an einer Stirnseite der ersten Rolle (200) des Außenläufermotors (300) montiert ist;
- die erste Rolle (200) von dem Außenläufermotor angetrieben wird;
- der wenigstens eine Zapfen (160a, 160b, 160c, 160d) des Rollenflansches ein Drehmoment von der ersten Rolle (200) auf den Rollenflansch (100) überträgt; und
- der Rollenflansch (100) das Drehmoment der ersten Rolle (200) auf die zweite Rolle (250) überträgt.

11. Elektrische Förderrolle (320) nach Anspruch 10, wobei
- der Rollenflansch (100) einen Drehmomentübertrager (230) umfasst, insbesondere eine Riemenscheibe oder ein Zahnrad, der zur Übertragung eines Drehmoments eingerichtet ist; und
- die Förderrolle eingerichtet ist, mittels des Drehmomentübertragers (230) Drehmoment, insbesondere mittels eines an dem Drehmomentübertrager (230) angebrachten Riemens (340a, 340b) oder Zahnrads, an wenigstens eine nicht elektrische Förderrolle (310a, 310b) eines Rollenförderers (330) zu übertragen.

12. Elektrische Förderrolle (320) nach Anspruch 10 oder 11, wobei der Rollenflansch (100) mindestens ein zapfenartiges Fixierelement (180) zur Fixierung der zweiten Rolle (250) und eine Schulter (190) zur Vermeidung einer axialen Verschiebung der zweiten Rolle (250) umfasst.
